Europäisches Patentamt

European Patent Office

Office européen des brevets

(19)

(11) **EP 0 653 585 B1**

(12) **EUROPÄISCHE PATENTSCHRIFT**

(45) Veröffentlichungstag und Bekanntmachung des Hinweises auf die Patenterteilung:
**29.10.1997  Patentblatt 1997/44**

(51) Int Cl.$^6$: **F17C 5/06**, F17C 13/02,
G01F 15/02, G01F 15/075

(21) Anmeldenummer: **94810600.0**

(22) Anmeldetag: **14.10.1994**

(54) **Verfahren und Vorrichtung zum schnellen Betanken eines Druckbehälters mit einem gasförmigen Medium**

Process and device for the quick filling of a pressure container with a gaseous fluid

Procédé et installation pour la remplissage rapide d'un réservoir sous pression avec un fluide gazeux

(84) Benannte Vertragsstaaten:
**AT CH DE FR GB IT LI NL**

(30) Priorität: **08.11.1993  CH 3350/93**

(43) Veröffentlichungstag der Anmeldung:
**17.05.1995  Patentblatt 1995/20**

(73) Patentinhaber: **Maschinenfabrik
Sulzer-Burckhardt AG
CH-4002 Basel (CH)**

(72) Erfinder: **Mutter, Heinz
CH-8400 Winterthur (CH)**

(74) Vertreter: **Heubeck, Bernhard
c/o Sulzer Management AG
KS Patente/0007
8401 Winterthur (CH)**

(56) Entgegenhaltungen:
EP-A- 0 093 275          WO-A-93/00264
US-A- 3 719 196

• PATENT ABSTRACTS OF JAPAN vol. 18, no. 492
(M-1673) 14. September 1994 & JP-A-06 159 595
(TOKICO LTD) 7. Juni 1994

## Beschreibung

Die Erfindung bezieht sich auf ein Verfahren zum Betanken eines Druckbehälters mit einem gasförmigen Medium gemäss dem Oberbegriff von Anspruch 1. Die Erfindung bezieht sich weiter auf eine Vorrichtung zur Durchführung des Verfahrens gemäss dem Oberbegriff von Anspruch 11. Die Erfindung bezieht sich weiter auf Betankungsgeräte und Betankungsanlagen, betrieben mit dem erfindungsgemässen Verfahren beziehungsweise umfassend die erfindungsgemässe Vorrichtung. Die Erfindung bezieht sich insbesondere auf das Betanken von mit Gas betriebenen Kraftfahrzeugen.

Es ist bekannt, einen Druckbehälter als Speichermittel für ein gasförmiges Medium zu verwenden. Das gespeicherte Gas findet in einem Prozess Verwendung, z.B. einem Verbrennungsprozess, so dass der Druckbehälter mit der Zeit teilweise oder vollständig entleert wird und einer Betankungsanlage zugeführt werden muss, um wieder aufgefüllt zu werden. Druckbehälter als Speichermittel für gasförmige Medien gewinnen für Kraftfahrzeuge zunehmend an Bedeutung, da sie es ermöglichen, alternative, gasförmige Kraftstoffe, wie z.B. Methan, Aethan, Propan, Wasserstoff oder Gasgemische, wie natürlich vorkommende Erdgase, für den Antrieb des Fahrzeugs zu verwenden. Heute gewinnt insbesondere die Verwendung von komprimiertem Erdgas für den Betrieb von Kraftfahrzeuge zunehmend an Bedeutung, insbesondere in Ländern, die über ein reiches Erdgasvorkommen verfügen. Kraftfahrzeuge lassen sich zudem auf sehr einfache Art auf einen Betrieb mit Erdgas umrüsten, und das Erdgas zeichnet sich bei der Verbrennung, im Vergleich zu Benzin oder Diesel, durch eine schadstoffarme Verbrennung und somit durch eine reduzierte Umweltbelastung aus.

Um das Volumen eines Druckbehälters in einer bezüglich dem Kraftfahrzeug vernünftigen Grösse zu halten, ist es üblich, Erdgas oder auch andere gasförmige Medien unter einem relativ hohen Druck, z.B. bei 200 bar, bezogen auf eine Referenztemperatur von 15°C zu speichern.

Die Akzeptanz eines derartigen Energiespeichers lässt sich unter den Kraftfahrzeugbesitzern verbessern, wenn es gelingt, den Druckbehälter auf eine sehr einfache Weise zu betanken, vergleichbar mit dem Betanken von Benzin. Ein Betanken mit Erdgas weist im Vergleich zu Benzin wesentlich mehr Gefahrenquellen auf, da das Gas unter hohem Druck in den Druckbehälter des Fahrzeugs transferiert wird, so dass spezielle Kupplungsteile, Ventile und Sicherheitsvorrichtungen notwendig sind. Weiter gilt es, die Gefahr von Feuer oder einer Explosion zu minimieren, wobei insbesondere zu berücksichtigen ist, dass Veränderungen der Aussentemperatur den Druck des Erdgases im Druckbehälter beeinflussen, sodass der Druck im ungünstigsten Falle auf einen unzulässig hohen Wert ansteigen könnte. Es ist ausserordentlich anspruchsvoll, einen Druckbehälter durch Betanken zu annähernd 100% zu füllen, das heisst den Druckbehälter auf einen vorgegebenen Nenndruck von z.B. 200 bar zu füllen, da der Druck im Druckbehälter von der Temperatur des eingefüllten, gasförmigen Mediums abhängt.

Aus der EP-0-356-377 ist ein Gasbetankungsgerät für Kraftfahrzeuge bekannt, bei dem das Gas direkt einer Gasleitung entnommen und mit einem Kompressor komprimiert wird, und über einen Betankungsschlauch und eine Kupplung direkt einem Druckbehälter eines Fahrzeugs zugeführt wird. Der Gasdruck wird von einem Drucksensor überwacht, der zwischen Kompressor und Betankungsschlauch angeordnet ist. Da der Betankungsvorgang sehr langsam abläuft, ist bei dem bekannten Gasbetankungsgerät davon auszugehen, dass der im Gasbetankungsgerät zwischen Kompressor und Betankungsschlauch gemessene Druck ungefähr dem Druck im Druckbehälter des Kraftfahrzeuges entspricht. Das Gasbetankungsgerät weist weiter einen Temperatursensor zur Bestimmung der Aussentemperatur auf, was erlaubt, aufgrund eines normierten Zusammenhangs zwischen Druck und Temperatur, für das gasförmige Medium wie Erdgas einen zulässigen Maximaldruck im Druckbehälter in Funktion der Aussentemperatur zu berechnen. Das Gasbetankungsgerät beendet den Betankungsvorgang, sobald der Drucksensor den vorgegebenen Maximaldruck erreicht hat.

Da ein Betankungsvorgang üblicherweise mehrere Stunden dauert findet ein Temperaturausgleich statt, sodass die Temperatur des Gases im Druckbehälter ungefähr der Umgebungstemperatur entspricht. Ein Nachteil dieses bekannten Gasbetankungsgerätes ist darin zu sehen, dass ein vollständiger Betankungsvorgang längere Zeit, üblicherweise mehrere Stunden, benötigt. Diese Art von Gasbetankungsgeräten wird z.B. verwendet, um den Druckbehälter von Kraftfahrzeugen über Nacht zu füllen.

Ein weiteres Gasbetankungsgerät, das ein schnelles Betanken eines Druckbehälters eines Kraftfahrzeuges, vergleichbar mit einem Betanken mit Benzin, erlaubt, ist aus der WO-93/00264 bekannt. Auch dieses Gerät misst die Aussentemperatur, um daraus einen entsprechend der Umgebungstemperatur korrigierten, zulässigen maximalen Fülldruck $p_z$ zu bestimmen. Da das Gasbetankungsgerät das Gas sehr schnell in den Druckbehälter des Kraftfahrzeuges presst, baut sich in den Zufuhrleitungen, Ventilen usw. ein Druckabfall auf, so dass der am Ausgang des Gasbetankungsgerätes mit einem Drucksensor gemessene Druck nicht mehr dem Druck des Gases im Druckbehälter entspricht. Während des Einfüllens des Gases in den Druckbehälter ist der Innendruck des Druckbehälters somit nicht erfassbar. Trotzdem ist sicherzustellen, dass der Druckbehälter mit Gas gefüllt wird und der maximal erlaubte Druck $p_z$ nicht überschritten wird. Die zitierte Veröffentlichung verwendet zum Betanken des Druckbehälters das folgende Verfahren:

Der Druckbehälter des Kraftfahrzeuges wird über einen Betankungsschlauch mit dem Gasbetankungsgerät verbunden, die Umgebungstemperatur gemessen, daraus ein entsprechender Abschaltdruck $p_z$ berechnet, eine kleine Gasmenge in den Druckbehälter hineingepresst, um das Rückschlagventil zu öffnen, und daraufhin der Massenstrom des Gases unterbrochen. Da das Rückschlagventil des Druckbehälters nun geöffnet ist, lässt sich mit einem Drucksensor, der sich im Gasbetankungsgerät befindet, der Druck $p_{vo}$ im Druckbehälter bestimmen, da zwischen dem Gasbetankungsgerät und dem Druckbehälter ein Druckausgleich stattfindet. Daraufhin wird vom Gasbetankungsgerät eine bestimmte Masse Gas $m_1$ in den Druckbehälter gepresst, der Massenstrom des Gases wiederum unterbrochen und der im Druckbehälter anliegende Druck $P_{v1}$ durch den Drucksensor im Gasbetankungsgerät gemessen. Basierend auf diesen beiden Messpunkten wird zuerst das Volumen V des Druckbehälters und danach die erforderliche Masse Gas berechnet, die zuzuführen ist, um den Druckbehälter bis zum vorgegebenen Druck $p_z$ zu füllen. Daraufhin wird die Gasfördervorrichtung wieder in Betrieb gesetzt, die geförderte Gasmenge gemessen, und der Betankungsvorgang beendet, sobald die berechnete Gasmenge vom Gasbetankungsgerät an den Druckbehälter abgegeben ist. Ein wesentlicher Nachteil dieses Betankungsverfahrens ist darin zu sehen, dass es in einem ersten Schritt notwendig ist, das Volumen des Druckbehälters zu berechnen und dass es in einem zweiten Schritt notwendig ist, aus dem Volumen die erforderliche Masse Gas zu berechnen. Das Betankungsverfahren verwendet zur Berechnung des Volumens des Druckbehälters die bekannten Gasgleichungen.

$$\text{Für ein ideales Gas gilt: } p\,V = (m/M)\,R\,T \qquad (1)$$

$$\text{Für ein reales Gas gilt: } p\,V = Z\,(m/M)\,R\,T \qquad (2)$$

wobei:

p = Druck
V = Volumen
m = Masse Gas
M = Molekulargewicht des Gases
R = universelle Gaskonstante
T = Temperatur
Z = Gaskompressionsfaktor

Das beschriebene Messverfahren erfasst die beiden Drücke $p_{v1}$, $p_{v0}$ sowie die Masse $m_1$. Unter Berücksichtigung eines realen Gases lässt sich somit das Volumen des Druckbehälters V nach folgender Formel berechnen:

$$V = (m_1\,Z_1\,R\,T_u) \,/\, (\,M\,(\,p_{v1} - p_{v0}\,((Z_1/Z_0)(T_1/T_0))))$$

wobei die folgenden Bezeichnungen gelten:

$m_1$ = bestimmte, bekannte Masse Gas
$Z_0$, $Z_1$ = Gaskompressionsfaktor am Messpunkt 0 und Messpunkt 1
R = universelle Gaskonstante
$T_u$ = Umgebungstemperatur
M = Molekulargewicht des Gases
$p_{v0}$, $p_{v1}$ = Druck am Messpunkt 0 und Messpunkt 1
T0, T1 = Temperatur am Messpunkt 0 und Messpunkt 1

Nachdem das Volumen V des Druckbehälters berechnet ist, wird die erforderliche Masse Gas $m_2$ berechnet, die notwendig ist, um den Druckbehälter bis zum berechneten Druck $p_z$ zu füllen. Dabei wird die Gasgleichung nach der Masse aufgelöst, so dass gilt:

$$m_2 = V\,M\,/\,R\,T_u\,((p_z/Z_z) - (p_{v1}/Z_1))$$

wobei:

$Z_z$ = Gaskompressionsfaktor am Punkt $p_z$

Dieses mathematische Verfahren zur Berechnung der erforderlichen Masse Gas $m_2$, das in einem ersten Schritt das Volumen V des Druckbehälters und in einem zweiten Schritt die erforderliche Masse $m_2$ Gas berechnet, weist verschiedene Nachteile auf. So ist es aufgrund rein physikalischer Gesetzmässigkeiten nicht möglich, mit der verwendeten Formel das Volumen V genau oder mit hinreichender Genauigkeit zu bestimmen, da die Werte einiger verwendeter Grössen nicht messbar und somit nicht bekannt sind. Dies aus folgenden Gründen:

1. Die Temperaturen $T_0$ und $T_1$ beziehen sich auf die Temperatur des Gases im Druckbehälter, die jedoch mit dem vorliegenden Verfahren nicht bestimmbar sind, da die üblichen Druckbehälter von Kraftfahrzeugen keinen integrierten Temperatursensor aufweisen. Dabei kann insbesondere nicht davon ausgegangen werden, dass $T_0$ und $T_1$ der Umgebungstemperatur entsprechen. Dies aus dem folgenden Grund: Bei Erdgas handelt es sich um ein reales Gas. Wird nun ein beinahe leerer Druckbehälter betankt, so tritt der bekannte Joule-Thomson-Effekt auf, der bewirkt, dass bei der anfänglichen kräftigen Entspannung eines realen Gases die Temperatur des Gases im Innern des Druckbehälters stark absinkt, so dass davon auszugehen ist, dass die Temperatur $T_0$ und/oder $T_1$ weit unter die Umgebungstemperatur abfallen. Ganz anders verhält es sich, wenn der Druckbehälter weitgehend gefüllt ist. Dann entspannt sich das Gas im Druckbehälter nur geringfügig, so dass sich die Temperatur $T_0$ und $T_1$ nur geringfügig verändert. Die Temperaturen $T_0$ und $T_1$ werden somit stark beeinflusst durch den Anfangsdruck, der zu Beginn der Betankung im Druckbehälter vorhanden ist.

2. Erdgas ist ein Gasgemisch, das üblicherweise zu über 90% aus Methan besteht, sowie weiteren Komponenten, wie Aethan, Propan, Butan, Stickstoff, Kohlendioxid usw. aufweist. Es ist bekannt, dass die Zusammensetzung eines von einem öffentlichen Gaslieferanten bezogenen Erdgases täglich schwanken kann. Dies hat zur Folge, dass sowohl das Molekulargewicht des Gases M als auch der Gaskompressibilitätsfaktor Z nicht als konstant vorausgesetzt werden darf.

Das beschriebene Verfahren weist somit den Nachteil auf, dass das Volumen V des Druckbehälters aufgrund physikalischer Gesetzmässigkeiten nicht genau berechenbar ist und somit auch die zusätzlich einzufüllende Masse $m_2$ aus den selben Gründen nicht genau berechenbar ist. Ein entscheidender Nachteil des bekannten Verfahrens ist somit darin zu sehen, dass die zusätzliche eingefüllte Masse $m_2$ einen Druck im Druckbehälter erzeugt, der in einem grösseren Streubereich um den vorgesehenen Druck $p_z$ liegen kann. Gefahren können sich insbesondere dann ergeben, wenn der Druck im Druckbehälter wesentlich über den maximal erlaubten Druck $p_z$ zu liegen kommt. Es ist jedoch auch nachteilig, wenn der Druck im Druckbehälter unter den maximal erlaubten Druck $p_z$ zu liegen kommt, weil der Druckbehälter dann für eine vollständige Füllung noch mehr Gas aufnehmen könnte.

Es ist bekannt, dass die Erwärmung beziehungsweise die Abkühlung des Gases im Druckbehälter, insbesondere beim Auffüllen eines leeren Tankes, zu Beginn des Tankvorganges als schneller, dynamischer Prozess abläuft. Das Gas entspannt sich beim Einfüllen in den Druckbehälter und kühlt daher stark ab. Zugleich findet zwischen der wärmeren Wandung des Druckbehälters und dem Gas ein Wärmeaustausch statt. Dieser hoch dynamische Prozess läuft insbesondere während den ersten 30 Sekunden des Füllprozesses ab. Wird das Einfüllen unterbrochen, so stellt sich zwischen der Temperatur der Aussenwand des Druckbehälters und dem Gas wieder ein Gleichgewicht ein. Ein Nachteil des bekannten Verfahrens ist somit darin zu sehen, dass zur Bestimmung der beiden Messpunkte $p_{v0}$, $p_{v1}$ eine relativ kleine, bestimmte Masse Gas $m_1$ zu Beginn des Tankvorganges dem Druckbehälter zugeführt werden muss. Unmittelbar nach dem Zuführen der Masse Gas $m_1$ wird der Druck $p_{v1}$ gemessene, wobei dieser Wert auf Grund der schnellen Temperaturänderungen der Gases im Druckbehälter sowie einem Zustand des Gases, der weit weg vom einem Gleichgewichtszustand liegt, mit einer grösseren Unsicherheit behaftet ist. Die nachfolgende Berechnung des Volumens V sowie der Masse $m_2$ ist daher entsprechend fehlerbehaftet.

Ein weitere Nachteil des bekannten Verfahrens ist darin zu sehen, dass der Massenstrom des Gases nach dem Prinzip der "sonic nozzle" bestimmt wird. Zur genauen Messung des durchfliessenden Massenstroms ist über der "sonic nozzle" ein entsprechend hoher Druckabfall des Gases notwendig.

Der Druck im vorgelagerten Speichertank muss auf einem entsprechend hohen Wert gehalten werden. Das Gas muss im vorgelagerten Speichertank höher komprimiert werden, was einem erhöhten Energiebedarf für die Kompression erfordert. Weiter bewirkt der erhöhte Druck im Speichertank bei leerem Druckbehälter einen stark ausgeprägten Joule-Thomson-Effekt, sodass das Gas kurz nach Tankbeginn im Druckbehälter auf sehr tiefe Temperaturen abgekühlt wird, weshalb die Gefahr besteht, dass Wasser und Methan zu Hydraten kristallisieren, und diese kristallinen Gebilde die Zuleitungen, Kuppelstellen oder Ventile beschlagen oder verstopfen können.

Es ist Aufgabe der vorliegenden Erfindung, ein Verfahren bzw. eine Vorrichtung vorzuschlagen, die es erlauben einen Druckbehälter in kurzer Zeit mit einem gasförmigen Medium auf einen vorgebbaren Fülldruck $p_z$ zu betanken, ohne die Notwendigkeit das Volumen des Druckbehälters zu bestimmen. Das Verfahren soll sich insbesondere auch eignen, um den Einfluss der Temperatur des Gases auf den Fülldurck $p_z$ zu berücksichtigen.

Die Aufgabe der Erfindung wird gelöst mit einem Verfahren gemäss den Merkmalen von Anspruch 1. Die abhängigen Ansprüche 2 bis 10 beziehen sich auf weitere vorteilhafte Ausgestaltungen des Verfahrens. Die Aufgabe wird weiter gelöst durch eine Vorrichtung gemäss den kennzeichnenden Merkmalen von Anspruch 11. Der Unteranspruch 12 bezieht sich auf eine weitere vorteilhafte Ausführungsform der erfindungsgemässen Vorrichtung.

Im vorliegenden, erfindungsgemässen Verfahren wird mehrere Male hintereinander jeweils eine bestimmte Menge Gas in den Druckbehälter gepresst, daraufhin das Ventil geschlossen und mit dem im Gasbetankungsgerät befindlichen Drucksensor der im Druckbehälter anliegende Druck erfasst. Der Zusammenhang zwischen der eingefüllten Gasmasse $m_i$ und dem im Druckbehälter anliegende Druck $p_i$ wird, ausgehend von ursprünglich zwei Messpunkten, mit jeder weiteren Messung verfeinert, wobei durch diese Stützpunkte eine Kurve gelegt werden kann, die mit bekannten mathematischen Verfahren, wie dem kleinsten Fehlerquadrat, immer genauer extrapolierbar wird, sodass mit dem Fortschreiten des Füllvorganges der Zusammenhang zwischen Masse und Druck für den jeweiligen Druckbehälter mit zunehmender Genauigkeit bekannt wird, und somit zuverlässiger extrapolierbar wird, so dass der Druckbehälter sehr genau bis zum vorgebbaren Druck $p_z$ auffüllbar ist. Dieses Verfahren weist den entscheidenden Vorteil auf, dass nur der Zusammenhang zwischen der Masse m und dem Druck p bestimmt wird, dass also das Volumen V des Druckbehälters nie berechnet werden muss. Es ist somit keine fehlerbehaftete Berechnung notwendig. Es kann direkt auf physikalische Parameter im Druckbehälter abgestützt werden, was ein zuverlässiges und reproduzierbares Verfahren ergibt, dies insbesondere auch bei sich verändernden Gaszusammensetzungen resp. Gaseigenschaften, somit insbesondere auch bei natürlichem Erdgas. Ein wesentlicher Vorteil des erfindungsgemässen Verfahrens ist somit darin zu sehen, dass es unabhängig von den Gaseigenschaften anwendbar ist, dass es sich somit auch für weitere Gase, wie z.B. Methan, Aethan oder Wasserstoff, eignet, um einen Druckbehälter zu füllen.

Die Eigenschaft des vorliegenden, erfindungsgemässen Verfahrens, einen Druckbehälter sehr genau bis zu einem vorgebbaren Druck $p_z$ mit Gas zu betanken, lässt sich durch die folgende Weiterbildung des Verfahrens vorteilhaft anwenden. Das in den Unteransprüchen weitergebildete Verfahren erlaubt es, die Temperaturerhöhung des Gases, die während dem Betankungsvorgang im Druckbehälter auftritt, zu ermitteln und während dem Betankungsvorgang zu berücksichtigen.

Wie in der Einleitung der vorliegenden Patentschrift beschrieben, wird vor dem Betankungsvorgang auf Grund der Aussentemperatur T beziehungsweise der Umgebungstemperatur $T_u$ ein zulässiger Fülldruck $p_z$ berechnet. Dazu verwendet man eine vorgegebene Temperatur-Druck-Charakteristik für Druckbehälter, die für unterschiedliche Gase, so auch für Erdgas bekannt ist. Mit einer solchen Temperatur-Druck-Charakteristik lässt sich mit einem bekannten, gemessenen Wert der Umgebungstemperatur $T_u$ ein zulässiger Fülldruck $p_z$ berechnen. Während dem Betankungsvorgang erwärmt sich das Gas im Druckbehälter üblicherweise auf eine Temperatur, die über der Aussentemperatur liegt, sodass der Effekt auftritt, dass ein Druckbehälter auf einen zulässigen Fülldruck $p_z$ betankt wird und der Betankungsvorgang abgeschlossen wird, und sich das Gas im Druckbehälter nachträglich auf die Aussentemperatur abkühlt, was den Fülldruck $p_z$ im Druckbehälter absinken lässt, sodass der Druckbehälter, nach dem Abkühlen auf die Aussentemperatur, nicht vollständig gefüllt ist. Diesem Verhalten des Gases wird im vorliegenden Betankungsverfahren dadurch Rechnung getragen, dass ein kurzfristiges Übertanken - das heisst ein Betanken auf einen Fülldruck $p_z$, der über dem zulässigen Fülldruck liegt - erlaubt wird, derart, dass der Druckbehälter nach dem Abkühlen auf die Aussentemperatur den zulässigen Fülldruck $p_z$ aufweist.

Dazu wird Mittels eines mathematischen Zusammenhangs, der mindestens die Grössen Anfangsdruck $p_{v0}$, zulässiger Fülldruck $p_z$ und die Aussentemperatur T beziehungsweise die Umgebungtemperatur $T_u$ umfasst, eine im Druckbehälter zu erwartende Temperaturerhöhung ($\Delta T$) berechnet, und daraus ein korrigierter zulässiger Fülldruck $p_{z1}$ bestimmt. Der Druckbehälter wird auf den korrigierten zulässigen Fülldruck $p_{z1}$ betankt, sodass nach dem Abkühlen des Gases auf die Aussentemperatur beziehungsweise auf die vorgegebene Referenztemperatur der Druckbehälter den zulässigen Fülldruck $p_z$ aufweist.

Im folgenden wird die Erfindung anhand von Ausführungsbeispielen beschrieben. Es zeigen:

Fig. 1a    Einen Temperaturverlauf eines Gases in einem Druckbehälter in Funktion der Zeit;

Fig. 1b    Einen Temperaturverlauf eines Gases in einem Druckbehälter in Funktion des Drucks;

Fig. 1c    Mehrere Verläufe des Druckes im Druckbehälter in Funktionen der zugeführten Masse bei unterschiedlichem Ausgangsdruck für den Füllvorgang;

Fig. 1d    Einen Verlauf des Druckes im Druckbehälter in Funktion der zugeführten Masse bei einem bestimmten Ausgangsdruck im Druckbehälter;

Fig. 1e    Ein Kennlinienfeld zur Berechung der zu erwartenden Temperaturerhöhung ($\Delta T$);

Fig. 1f    Einen Verlauf des Druckes im Druckbehälter in Funktion der zugeführten Masse bei einem korrigierten zulässigen Fülldruck ;

Fig. 2a    Ein Ausführungsbeispiel einer Vorrichtung zur Betankung;

Fig. 2b    Ein weiteres Ausführungsbeispiel einer Vorrichtung zur Betankung mit Speichertanks unterschiedlichen Druckes;

Fig. 2c    Ein weiteres Ausführungsbeispiel einer Vorrichtung zur Betankung mit Speichertanks unterschiedlichen Druckes;

Fig. 3a    Ein Flussdiagramm eines Verfahrens zum Betrieb der Betankungsvorrichtung;

Fig. 3b    Ein Flussdiagramm eines weiteren Verfahrens zum Betrieb der Betankungsvorrichtung.

Das erfindungsgemässe Verfahren erfasst während dem Betankungsvorgang mehrmals in diskreten Schritten die zugeführte Masse Gas sowie den in einem Druckbehälter anliegenden Druck, und bestimmt aus diesen Messwerten während dem ablaufenden Betankungsvorgang den Zusammenhang zwischen Masse und Druck für den jeweiligen Druckbehälter.

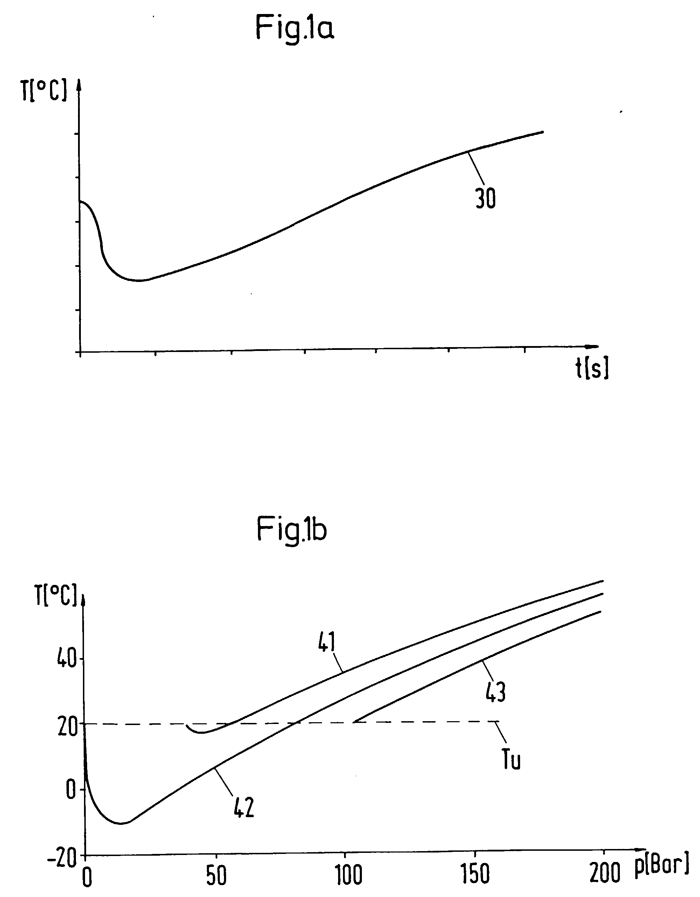

Aus der Gasgleichung für reale Gase (2) ist der Zusammenhang zwischen dem Druck p und der Masse m bekannt. Es gilt: p/m = (Z R T) / (M V) Die Grössen R, M und V sind für einen bestimmten Druckbehälter und während einem Betankungsvorgang konstant, sodass der Druck p in Funktion der Masse m von der Temperatur T sowie vom Gaskompressionsfaktor Z abhängt. Diese beiden Faktoren zeichnen sich bei realen Gasen durch ein nichtlineares Verhalten aus, sodass für reale Gase ein nichtlinearer Zusammenhang zwischen Masse m und Druck p besteht. Der Verlauf 30 der Temperatur T des Gases im Druckbehälter in Funktion der Zeit t ist für einen Betankungsvorgang in Fig. 1a dargestellt. Der Druckbehälter, der von einem Speichertank mit ungefähr konstantem Druck betankt wird, ist zu Beginn der Betankung beinahe leer, sodass sich das Gas, infolge des Joule-Tompson-Effektes, vorerst stark abkühlt. Je mehr Gas zugeführt wird, um so stärker wird das Gas wieder komprimiert, sodass die Temperatur des Gases im Druckbehälter mit zunehmender Füllung ansteigt. Der Verlauf dieser Funktion wird weiter beeinflusst durch den Temperaturaustausch zwischen dem Gas und der Wand des Druckbehälters. Weiter ist der Verlauf dieser Funktion abhängig vom Anfangsdruck, der zu Beginn des Betankungsvorganges im Druckbehälter anliegt.

Der Einfluss des beim Start des Betanktungsvorganges im Druckbehälter anliegenden Anfangsdruckes auf die Erwärmung des Gases ist in Fig. 1b dargestellt. Der Druck im Speichertank beträgt 250 Bar. Die Umgebungstemperatur Tu beträgt 20 °C. Fig. 1b zeigt den Verlauf der Temperatur T eines Gases im Druckbehälter in Funktion des Druckes p. In Kurve 41 beträgt der Druck im Druckbehälter zu Beginn des Betankungsvorganges 40 Bar, in Kurve 42 beträgt der Anfangsdruck 0 Bar und in der Kurve 43 beträgt der Anfangsdruck 100 Bar. Der Temperaturverlauf sowie die Endtemperatur des Gases im Druckbehälter, unmittelbar nach Abschluss des Betankungsvorganges, hängt somit ab vom Druck im Druckbehälter zu Beginn des Betankungsvorganges. Aus dem Verlauf der Kurve 42 ist ein ausgeprägter Joule-Tompson-Effekt zu erkennen. Im Verlauf der Kurve 41 übt dieser Effekt zu Beginn des Betankungsvorganges einen wesentlich geringeren Einfluss auf den Temperaturverlauf aus, wogegen dieser Effekt bei Kurve 43 vollständig unbedeutend wird.

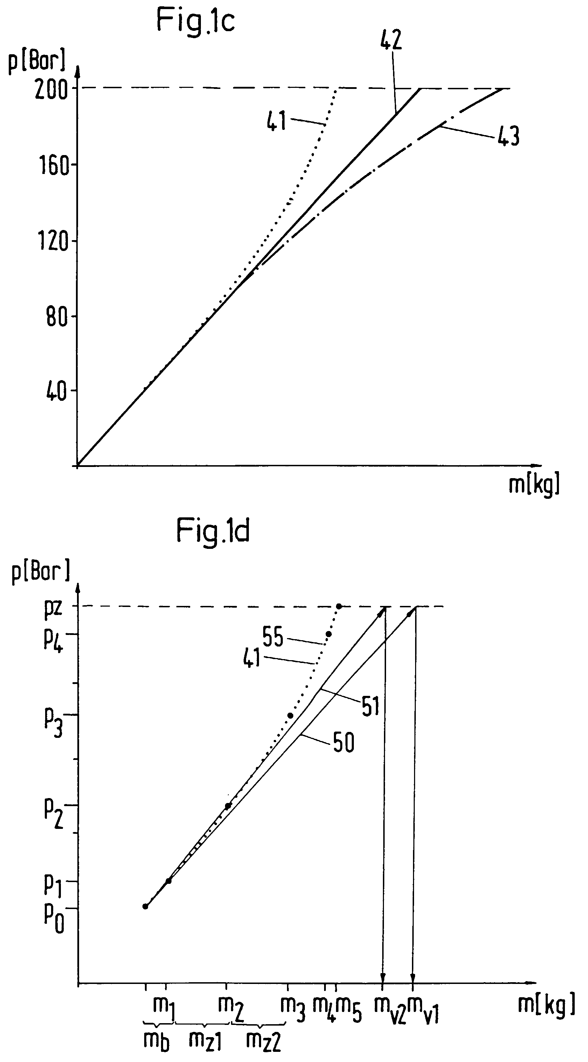

Fig. 1c zeigt den Verlauf zwischen der Masse m eines Gases in Funktion des Drucks p für denselben, in Fig. 1b dargestellten Betankungsvorgang. Zur Verdeutlichung der Effekte sind die Verläufe der Kurven 41, 42 und 43 überhöht dargestellt. Die Kurve 42 beginnt bei einem Ausgangsdruck des Druckbehälters von etwa 0 Bar und zeigt einen Verlauf, der in erster Näherung als linear bezeichnet werden kann. Die Kurve 41 beginnt bei einem Ausgangsdruck des Druckbehälters von etwa 40 Bar, und weist in deren Verlauf eine progressiv zunehmende Steigung auf. Die Kurve 43 beginnt bei einem Ausgangsdruck des Druckbehälters von etwa 100 Bar, und weist in deren Verlauf eine abnehmende Steigung auf. Zwischen dem Druck p und der Masse m besteht somit ein nichtlinearer Zusammenhang, wobei der Verlauf der Steigung abhängig ist von Faktoren wie dem Ausgangsdruck im Druckbehälter, beziehungsweise, wie in Fig. 1b dargestellt, der Temperatur T des Gases im Druckbehälter.

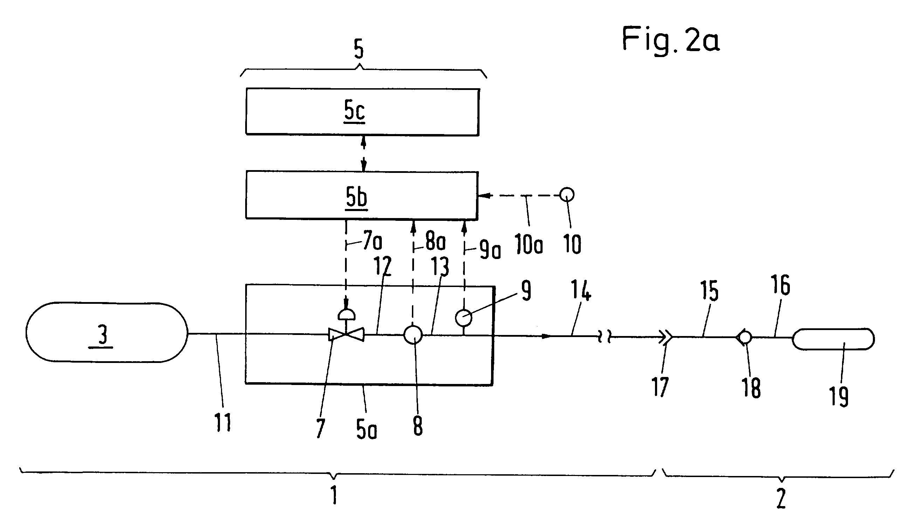

Zum besseren Verständnis des Verfahrens wird vorerst in Fig. 2a eine Vorrichtung zum Betrieb des erfindungsgemässen Verfahrens dargestellt. Eine Betankungsanlage 1 dient zur Betankung einer mobilen Tankvorrichtung 2 mit eines gasförmigen Medium. Die mobile Tankvorrichtung 2 ist im vorliegenden Ausführungsbeispiel in einem Kraftfahrzeug eingebaut. Die Tankvorrichtung 2 umfasst eine Anschlussvorrichtung 17, die über eine Verbindungsleitung 15 mit einem Rückschlagventil 18 verbunden ist, das seinerseits über eine Verbindungsleitung 16 mit einem Druckbehälter 19 verbunden ist. Zum Betanken des Druckbehälters 19 wird eine zur Betankungsanlage 1 gehörende, druckfeste Verbindungsleitung 14 mit der Anschlussvorrichtung 17 verbunden, sodass dem Druckbehälter 19 Gas zuführbar ist. Die Betankungsanlage umfasst eine Speichereinheit 3, in der ein gasförmiges Medium, im vorliegenden Ausführungsbeispiel handelt es sich um Erdgas, unter einem Druck von über 200 Bar gelagert ist. Eine nicht dargestellte Kompressionsvorrichtung füllt die Speichereinheit 3 bei Bedarf wieder mit Erdgas auf. Die Speichereinheit 3 ist über eine Verbindungsleitung 11 mit einer Steuer- und Messvorrichtung 5a, die Bestandteil einer Abgabevorrichtung 5 ist. Die Steuer- und Messvorrichtung 5a weist ein Regelventil 7 auf, das über eine Steuerleitung 7a von einer Regelvorrichtung 5b, die ebenfalls Bestandteil der Abgabevorrichtung 5 ist, ansteuerbar ist. Das Regelventil 7 ist über eine Steuerleitung mit einer Massendurchflussmessvorrichtung 8 verbunden, deren Messignal über eine Messleitung 8a der Regelvorrichtung 5b zugeführt wird. Der Massendurchflussmessvorrichtung 8 folgt eine Verbindungsleitung 13, die ausserhalb der Steuer- und Messvorrichtung 5a in eine druckfeste Verbindungsleitung 14 überführt. Die Verbindungsleitung 14 ist als flexibler Schlauch ausgeführt, dessen eines Ende sich mit der Anschlussvorrichtung 17 verbinden lässt. Mit der Verbindungsleitung 13 ist ein Drucksensor 9 verbunden, der über die Messleitung 9a ein Messignal der Regelvorrichtung 5b zuführt. Weiter ist ein Temperatursensor 10 zur Bestimmung der Umgebungstemperatur $T_u$ vorgesehen, dessen Messignal über eine Messleitung 10a der Regelvorrichtung 5b zuführbar ist. Die Abgabevorrichtung 5 hat die Aufgabe, den Druckbehälter 19 mit Gas zu füllen, wobei der Fülldruck festgelegt oder vorgebbar ist. Die Abgabevorrichtung 5 weist eine Ein- und Ausgabevorrichtung 5c auf, mit Eingabevorrichtungen um zum Beispiel die Anlage in Betrieb zu setzen, sowie mit Ausgabevorrichtungen, auf denen zum Beispiel die Masse des getankten Gases oder der Preis des Gases angezeigt werden. Die Ein- und Ausgabevorrichtung 5c ist mit einer Regelvorrichtung 5b verbunden, die ihrerseits die Steuer- und Messvorrichtung 5a regelt, derart, dass der Druckbehälter mit Gas gefüllt wird. Die Regelvorrichtung (5b) weist einen Mikroprozessor mit RAM, ROM und Ein-/Ausgabemitteln auf.

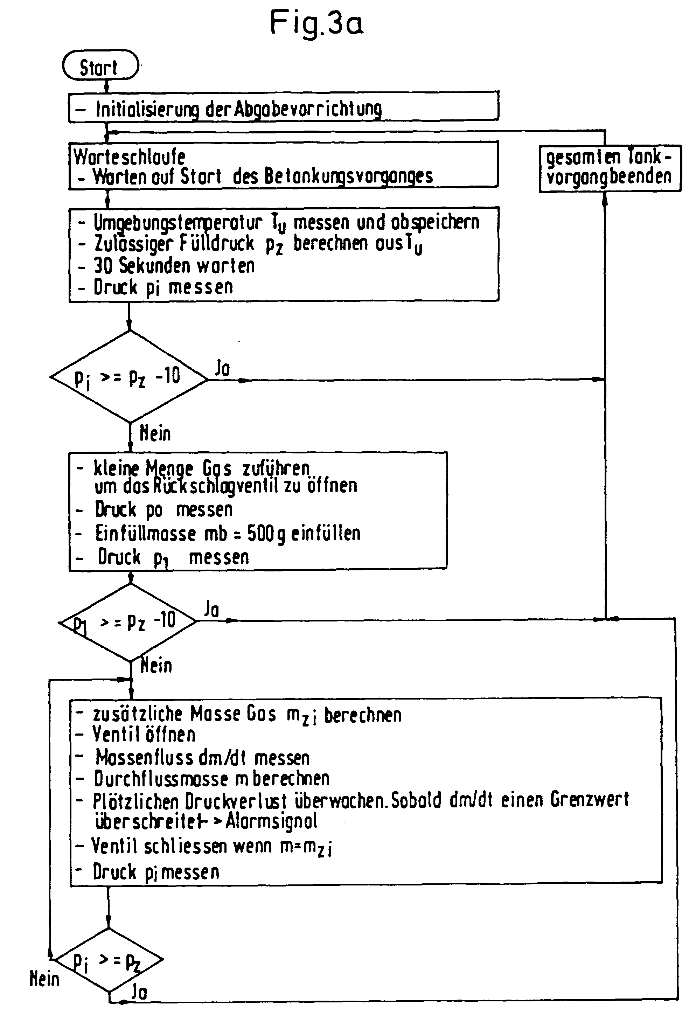

Fig. 3a zeigt ein Flussdiagramm für ein Verfahren zum Betrieb der Vorrichtung gemäss Fig. 2a. In Fig. 1d zusammen mit Fig. 3a ist das erfindungsgemässe Verfahren zur Betankung eines Druckbehälters 19 ausführlich an einem Beispiel dargestellt. Als Verfahrensbeispiel ist der Spezialfall dargestellt, dass der Betankungsvorgang einem Kurvenverlauf gemäss Kurve 41 abläuft. Das Verfahren ist jedoch auch für Kurvenverläufe gemäss Kurve 42 oder 43 anwendbar. Zur besseren Darstellung der Effekte ist der Kurvenverlauf überhöht dargestellt. Der Druckbehälter weist einen Anfangsdruck von 40 Bar auf. Der Fülldruck beträgt 200 Bar bei einer Referenztemperatur von 15 °C.

Das Verfahren zum schnellen Betanken eines Druckbehälters 19 mit einem Gas, das bezüglich dem Druckbehälter 19 unter einem Druck von über 200 Bar in der Speichereinheit 3 vorrätig ist, besteht aus den folgenden Schritten:

1. Die druckfeste Verbindungsleitung 14 der Betankungsanlage wird mit dem Druckbehälter 19 verbunden.

2. Der Temperatursensor 10 misst die Umgebungstemparatur $T_u$, woraus die Regelvorrichtung 5b auf Grund einer vorgegebenen Temperatur-Druck-Charakteristik für den Druckbehälter 19 einen temperaturkorrigierten Fülldruck pz berechnet, auf den der Druckbehälter 19 zu füllen ist.

3. Das Ventil 7 wird geöffnet, um dem Druckbehälter 19 eine kleine Menge Gas, z.B. 100 Gramm, zuzuführen, und daraufhin wieder geschlossen. Dabei wird das Rückschlagventil 18 geöffnet, sodass mit der Verbindungsleitung 14 ein Druckausgleich stattfindet, und dadurch der Druck im Druckbehälter 19 durch den Drucksensor 9, der sich in der Steuer- und Messvorrichtung 5a befindet, messbar ist. Diese erste Druckmessung ergibt den ersten Messpunkt $P_0$.

4. Dem Druckbehälter 19 wird eine bestimmte Masse Gas $m_b$ zugeführt, zum Beispiel 500 g, das Ventil 7 wiederum geschlossen, und der im Druckbehälter 19 anliegende Druck $p_1$ gemessen. Sollte die Druckdifferen $p_1$ minus $p_0$ unter einem vorgebbaren Wert liegen, so wird mehrmals eine Masse Gas zugeführt, bis eine vorgebbare Druckdifferenz erreicht ist. Dies ist notwendig, um bei grossen Druckbehältern 19 einen eindeutigen Druckanstieg zu erzielen.

5. In einem weiteren Schritt wird eine zusätzliche Masse Gas $m_z$ bestimmt, die in den Druckbehälter 19 einzufüllen ist. Die zusätzliche Masse Gas $m_{z1}$ wird zum Beispiel durch Extrapolation des Verlaufes der bereits gemessenen Messpunkte berechnet. Durch die beiden Messpunkte wird eine mathematische Funktion gelegt, zum Beispiel eine Gerade 50, und durch Extrapolation dieser Geraden bis zum Fülldruck von $p_z$ eine Masse Gas $m_{v1}$ bestimmt. Für den Fall eines Kurvenverlaufes gemäss Kurve 41 ergibt die lineare Extrapolation eine zu grosse Masse Gas $m_{v1}$. Ein Betanken des Druckbehälters 19 mit dieser berechneten Masse Gas $m_{v1}$ würde im Druckbehälter einen Druck $p_{v1}$ erzeugen, der weit über dem zulässigen Druck $p_z$ liegt. Um sicherzustellen, dass der Druck beim nachfolgenden Füllvorgang unter den Fülldruck $p_z$ zu liegen kommt, wird als zusätzliche Masse Gas $m_{z1}$ ein Bruchteil, z.B. 25% oder 50% von $m_{v1}$ angenommen.

6. Die zusätzliche Masse Gas $m_{z1}$ wird in den Druckbehälter 19 eingefüllt und daraufhin der Druck $p_2$ bestimmt. Somit ist über den Zusammenhang zwischen Masse m und Druck p ein weiterer Stützpunkt bekannt. Eine mathematische Funktion wird durch die bekannten Stützpunkt gelegt, im vorliegenden Ausführungsbeispiel eine Gerade durch die Punkt $(m_1,p_1)$ und $(m_2,p_2)$. Diese Funktion wird wiederum bis zum Fülldruck $p_z$ extrapoliert und daraus eine Masse Gas $m_{v2}$ und daraus eine neue zusätzliche Masse Gas $m_{z2}$ bestimmt, die dem Druckbehälter 19 zugeführt wird.

7. Der vorhergehende Schritt 6 kann mehrmals nacheinander durchgeführt werden, und jeweils eine neue zusätzliche Masse Gas $m_{zi}$ bestimmt werden. Dabei wird, wie in Fig. 1d dargestellt, während dem Füllvorgang der Verlauf des Zusammenhanges zwischen Masse m und Druck p immer besser bekannt. Durch die bekannten Messpunkte lässt sich an Stelle einer Geraden auch eine mathematische Funktion höherer Ordnung 55 legen, die, zum Beispiel mit der Methode des kleinsten Fehlerquadrates, hinreichend genau dem Verlauf der Messpunkte anpassbar ist. Dadurch lässt sich der Zusammenhang zwischen Masse m und Druck p immer genauer extrapolieren, sodass die zusätzlichen Massen Gas $m_{zi}$ derart bestimmbar sind, dass der Druckbehälter 19 hinreichend genau mit dem Fülldruck $p_z$ gefüllt wird. Der Betankungsvorgang kann durch zwei unterschiedliche Kriterien abgebrochen werden,

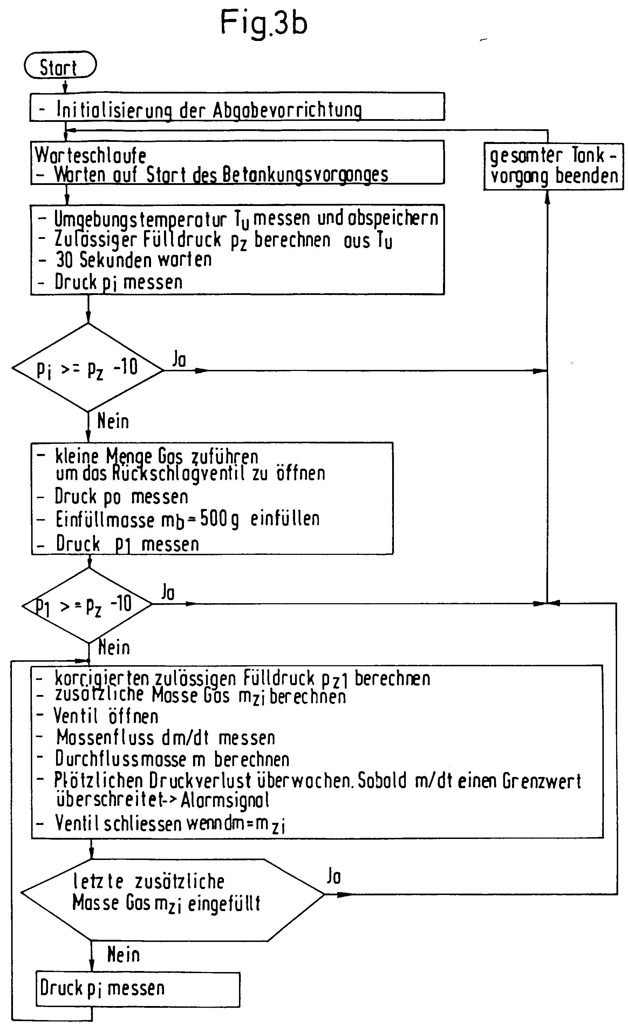

- entweder sobald der Fülldruck $p_z$ anliegt, was durch Messen des anliegenden Druckes p feststellbar ist, (wie in Fig. 3a dargestellt)
- oder sobald eine zusätzliche Masse Gas $m_{zi}$ eingefüllt ist, von der vorgängig berechnet wurde, dass sie den Druck im Druckbehälter auf etwa den Fülldruck $p_z$ ansteigen lässt (wie dies in Fig. 3b dargestellt ist. Während dem Betankungsvorgang ist auf Grund des Steigungsverlaufes zwischen Masse m und Druck p feststellbar, ob der Füllvorgang einen Kurvenverlauf gemäss Kurve 41, 42 oder 43 aufweist. Dies wird im Extrapolationsverfahren bei der Berechung der zusätzlichen Masse Gas $m_{zi}$ berücksichtigt.

Somit lässt sich der Druckbehälter 19 mit einem Fülldruck $p_z$ betanken, ohne die Notwendigkeit das Volumen V des Druckbehälters 19 zu kennen oder zu berechnen. Dieses Verfahren ist zudem unabhängig von Eigenschaften des verwendeten Gases. Es ist bekannt, dass die Zusammensetzung von Erdgas täglich schwanken kann, was auch der Zusammenhang zwischen m und p entsprechend beeinflusst. Weiter wurde in Fig. 1c mit den Kurven 41, 42 und 43 dargestellt, dass der Zusammenhang zwischen m und p von Anfangsdruck im Druckbehälters 19 abhängt. Dadurch, dass der Zusammenhang zwischen m und p während dem Betankungsvorgang ständig neu erfasst wird, lässt sich ein Druckbehälter 19 immer zuverlässig mit einem Fülldruck $p_z$ betanken, unabhängig von den jeweils vorliegenden physikalischen Randbedingunen wie Anfangsdruck im Druckbehälter, Gaszusammensetzung, Temperatur oder Druck des Gases in der Speichereinheit.

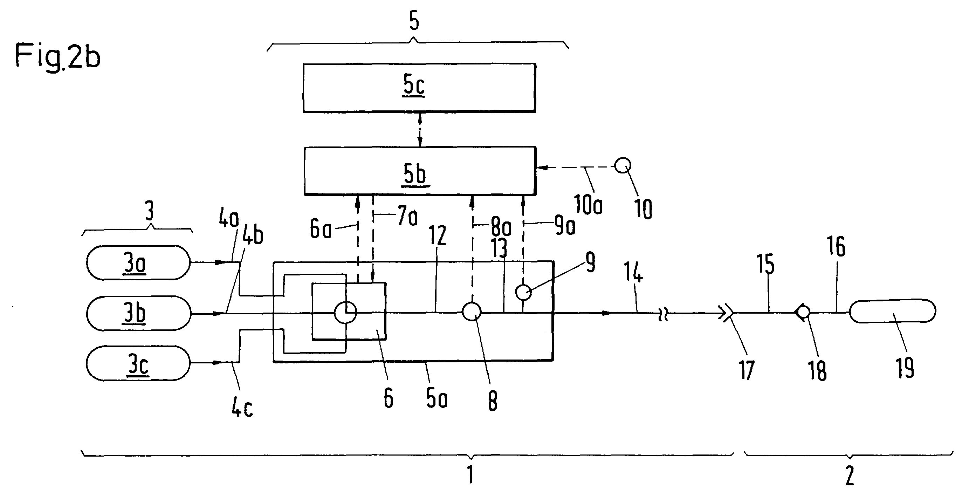

Fig. 2b zeigt ein weiteres Ausführungsbeispiel einer Betankungsanlage 1. Im Unterschied zur Ausführungsform bemäss Fig. 2a weist die Speichereinheit 3 drei Speichertanks 3a, 3b, 3c auf, die über Verbindungsleitungen 4a, 4b, 4c mit einer Umsteuervorrichtung 6 verbunden sind. Die Umsteuervorrichtung 6 verbindet jeweils eine der Verbindungsleitungen 4a, 4b, 4c mit der nachfolgenden Verbindungsleitung 12, wobei die Umsteuervorrichtung 6 auch Zwischenstellungen einnehmen kann, um den Gasstrom zur Verbindungsleitung 12 zu unterbrechen. Die Umsteuervorrichtung 6 wird über die Steuerleitung 7a von der Regelvorrichtung 5b angesteuert. Eine Messleitung 6a übermittelt die Stellung der Umsteuervorrichtung 7 der Regelvorrichtung 5b. Die drei Speichertanks 3a, 3b, 3c können ein Gas bei jeweils unterschiedlichem Druck speichern, wobei der Speichertank 3a den tiefsten, der Speichertank 3c den höchsten Druck aufweist. Weiter ist es möglich, dass die drei Speichertanks 3a, 3b, 3c auf gleiche Art gefüllt werden, und dabei nach dem Füllvorgang denselben Druck aufweisen. Die drei Speichertanks 3a, 3b, 3c können während den folgenden Betankungsvorgängen unterschiedlich entleert werden, sodass die drei Speichertanks 3a, 3b, 3c nach einer gewissen Zeit unterschiedliche Drücke aufweisen, die erst bei einem nachfolgenden Füllvorgang wieder ausgeglichen werden.

Der Druckbehälter 19 lässt sich derart betanken, dass mit dem Speichertank 3a, der den tiefsten Druck aufweist, begonnen wird, und während dem Betankungsvorgang jeweils auf einen Speichertank mit höherem Druck umgeschaltet wird, sobald der Massenstrom durch die Massendurchflussmessvorrichtung 8 einen vorgebbaren Wert unterschreitet. Der Vorteil einer derartigen Betankung ist darin zu sehen, dass die Kompressionsenergie, die für den Gasdruck in den Speichertanks 3a, 3b, 3c zu leisten ist, klein gehalten werden kann.

Der Druckbehälter 19 lässt sich auch derart betanken, dass die Temperatur des Gases im Druckbehälter 19 nach dem Betankungsvorgang einen möglichst kleinen Wert annimmt, dass sie insbesondere möglichst nahe der Umgebungstemperatur liegt. Dies lässt sich gemäss Fig. 1b dadurch erreichen, dass die Speichertanks 3a, 3b, 3c derart angesteuert werden, dass der Füllvorgang entlang einer Kurve 43 oder einer Kurve 42 verläuft. Dies kann hohe Drücke in den Speichertanks 3a, 3b, 3c erfordern, um während dem Füllvorgang zum Beispiel mehrmals einen Verlauf gemäss Kurve 42 mit einem ausgeprägten Joule-Tompson-Effekt auftreten zu lassen. Mit einer erhöhten Kompressionsenergie und einem entsprechenden Betankungsverfahren lässt sich die Temperatur des Gases im Druckbehälter 19 senken.

In den Ausführungsbeispielen gemäss Fig. 2a und 2b sind weitere, für einen Fachmann naheliegende Komponenten wie zum Beispiel die Kompressionsvorrichtung für die Speichertanks, den Speichertanks zugeordnete Druck- und Temperatursensoren, oder ein Belüftungssystem, um die druckfeste Verbindungsleitung 14 nach einem Betanken zu lüften, nicht dargestellt.

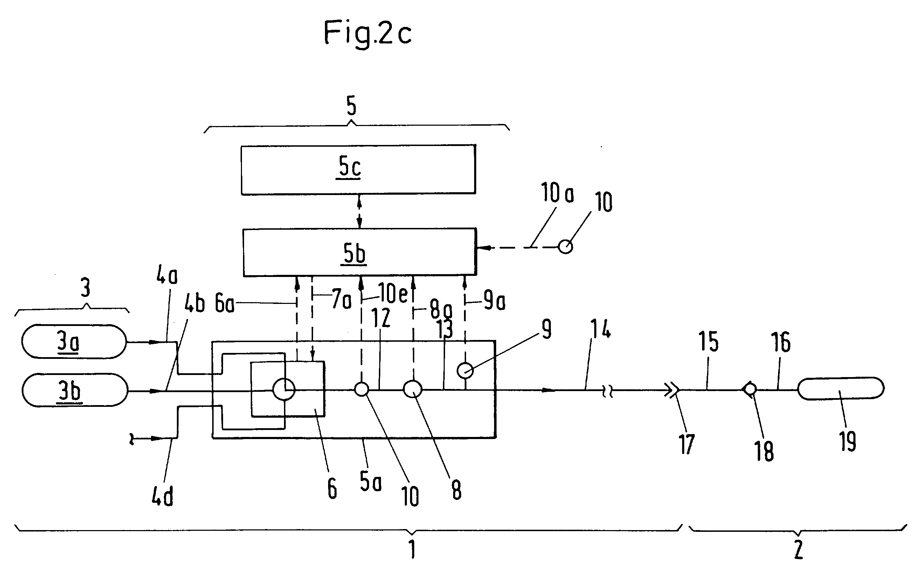

Fig. 2c zeigt ein weiteres Ausführungsbeispiel einer Betankungsanlage 1 mit einem Temperatursensor 10 zur Erfassung der Gastemparatur, der an der Verbindungsleitung 12 angeordnet ist. Der Wert des Temperatursensors 10 wird über die Signalleitung 10e der Regelvorrichtung zugeführt. Weiter kann die Regelvorrichtung 5b Messignale von Drucksensoren erfassen, die den Druck in den Speichertanks 3a und 3b erfassen. Die Verbindungsleitung 4d wird direkt von einem Kompressor angespiesen. Wenn zum Beispiel der Druck im Speichertanks 3a und/oder 3b unter einen gewissen Wert fällt, kann über die Verbindungsleitung 4d das Gas direkt vom Kompressor kommend der Steuer- und Messvorrichtung 5a zugeführt werden. Die Anordnung des Temperatursensor 10 in der Verbindungsleitung 12 gewährleistet, dass die Temperatur des durch die Steuervorrichtung 5a fliessenden Gases kontinuierlich messbar ist.

Die Massendurchflussmessvorrichtung 8 besteht aus einem Massendurchflussmesser basierend auf dem Korriols-Prinzip. Damit wird ein Massenstrom dm/dt erfasst, sodass die eingefüllte Masse mit der Regelvorrichtung 5b genau berechenbar ist. Es sind natürlich auch Massendurchflussmessvorrichtungen 8, die auf einem anderen Messprinzip basieren, für die Anwendung im erfindungsgemässen Verfahren beziehungsweise in der gemäss dem Verfahren betriebenen Vorrichtung geeignet.

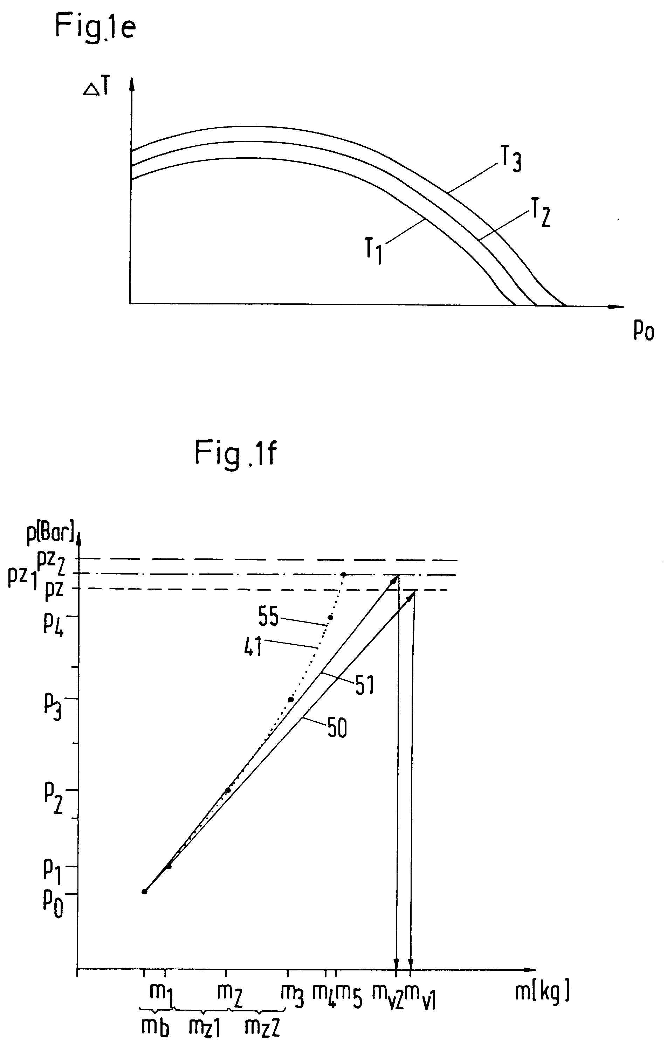

Mit Hilfe von Figur 1b wurde die Temperaturerhöhung des Gases im Druckbehälter dargestellt und beschrieben, die während einem Betankungsvorgang auftreten kann. In Fig. 1e ist derselbe physikalische Zusammenhang nochmals anders dargestellt. Fig. 1e zeigt einen mathematisch oder empirisch ermittelten Zusammenhang zwischen der zu erwartenden Temperaturerhöhung ($\Delta T$) in Funktion des Anfangsdruckes $p_0$, des

Fülldruckes $p_z$ sowie der Umgebungstemperatur $T_u$. Unterschiedliche Umgebungstemperatur $T_u$ sind als die Temperaturen $T_1$, $T_2$ oder $T_3$ dargestellt.

Aus der zu erwartenden Temperaturerhöhung ($\Delta T$) lässt sich über den bekannten, normierten Zusammenhang zwischen Druck und Temperatur ein korrigierter zulässiger Fülldruck $P_{z1}$ berechnen. Das in Fig. 1f dargestellte Betankungsverfahren geht davon aus, dass es erlaubt ist, den Druckbehälter kurzfristig über den zulässigen Fülldruck $p_z$ hinaus zu betanken, wenn berücksichtigt wird, dass sich das im Druckbehälter befindliche Gas relativ bald nach Beendigung des Betankungsvorganges auf die Umgebungstemperatur $T_u$ abkühlt und dabei der Druck des Gases auf den zulässigen Fülldruck $p_z$ absinkt. Aus Gründen der Sicherheit darf der im Druckbehälter erzeugte Druck einen gewissen Höchstwert jedoch nicht überschreiten, um einer Beschädigung des Druckbehälters vorzubeugen. Im Betankungsvorgang gemäss Fig. 1f wird während dem Betankungsvorgang in einer ersten Extrapolation, dargestellt durch die Gerade 50, auf den zulässigen Fülldruck pz extrapoliert um eine Masse Gas $m_{v1}$ zu bestimmen. Daraufhin wird eine zusätzliche Masse Gas $m_{z1}$ eingefüllt, der Betankungsvorgang unterbrochen, der anliegende Druck $p_2$ gemessen, daraufhin eine zu erwartende Temperaturerhöhung ($\Delta T$) und daraus ein korrigierter zulässiger Fülldruck $p_{z1}$ berechnet. Daraufhin wird die Gerade 51, welche die Punkte $(m_1, p_1)$ und $(m_2, p_2)$ verbindet, zum korrigierten zulässigen Fülldruck $p_{z1}$ extrapoliert, um eine Masse Gas $m_{v2}$ und daraus eine neue zusätzliche Masse Gas $m_{z2}$ zu berechnen, die dem Druckbehälter 19 zugeführt wird. Der weitere Füllvorgang verläuft entlang der Kurve 41, wobei die diskreten Punkte auf der Kurve 41 gemessenen Werten (Druck, Masse) entspricht, bis das Gas im Druckbehälter den korrigierten zulässigen Fülldruck $p_{z1}$ aufweist.

Die zu erwartende Temperaturerhöhung ($\Delta T$) lässt sich während dem gesamten Betankungsverfahren nur einmal oder auch mehrmals berechnen und daraus ein korrigierter zulässigen Fülldruck $p_{z1}$ berechnen. Aus Fig. 1a ist ersichtlich, dass die Erwärmung des Gases im Druckbehälter auch eine Funktion Zeit t ist. Zwischen dem Gas und der Wandung des Druckbehälters findet ständig ein Temperaturaustausch statt. Ist die Temperatur des Gases im Druckbehälter zum Beispiel grösser als die Temperatur der Wandung, so wird das Gas in Funktion der Zeit t abgekühlt. Dieser Prozess der Wärmeabgabe in Funktion der Zeit lässt sich mathematisch zum Beispiel durch eine abnehmende e-Funktion darstellen. Die erforderliche Betankungszeit $t_f$ für das Füllen des Druckbehälters lässt sich ungefähr abschätzen, sodass über die e-Funktion die zu erwartende Temperaturreduktion ($\Delta T2$) berechnet werden kann, welche durch die Wärmeabgabe des Druckbehälters während der Betankungszeit $t_f$ auftritt. Basierend auf einer vorgegebenen Temperatur-Druck-Charakteristik für Druckbehälter lässt sich aus dem Wert der Temperaturreduktion ($\Delta T2$) ein korrigierter zulässiger Fülldruck ($p_{z1}$) berechnen. Zudem kann ein bereits gemäss Fig. 1e berechneter korrigierter zulässiger Fülldruck ($p_{z1}$) weiter auf Grund der Betankungszeit $t_f$ korrigiert und neu berechnet werden.

Der Fülldruck lässt sich durch ein weiteres Verfahren korrigieren, sodass, wie in Fig. 1f dargestellt, ein weiterer korrigierter Fülldruck $p_{z2}$ berechnet wird. Dabei wird die Temperatur $T_g$ sowie die Masse m des zugeführten Gases in der Abgabevorrichtung 5 kontinuierlich gemessen, daraus eine durchschnittliche Gastemperatur $T_d$ des zugeführten Gases berechnet, und basierend auf einer vorgegebenen Temperatur-Druck-Charakteristik aus der Differenz von Umgebungstemperatur $T_u$ und durchschnittlicher Gastemperatur $T_d$ ein korrigierter zulässiger Fülldruck $p_{z2}$ berechnet, bis zu dem der Druckbehälter mit Gas gefüllt wird. Zur Ermittlung der durchschnittlichen Gastemperatur $T_d$ eignet sich zum Beispiel eine Betankungsanlage 1 gemäss Fig. 2c.

Fig. 3b zusammen mit Fig. 1f zeigen ein Verfahren zum Betanken eines Druckbehälters. Das in Fig. 3b dargestellt Verfahren berechnet bei jedem Durchlauf durch die dargestellte Schlaufe einen neuen korrigierten zulässigen Fülldruck $p_{z1}$, wobei die Schlaufe verlassen wird, sobald die letzte zusätzliche Masse Gas $m_{zi}$ eingefüllt ist, von der berechnet wurde, dass sie den Druckbehälter auf einen Druck $p_{z1}$ füllt. Es kann sich jedoch auch als vorteilhaft erweisen, den korrigierten zulässigen Fülldruckes $p_{z1}$ oder $p_{z2}$ während einem Betankungsvorgang nur einmal zu berechnen.

Weiter lässt sich ein zulässiger Fülldruck $p_{z3}$ berechnen, in dem sowohl der zulässige Fülldruck $p_{z1}$ als auch der zulässige Fülldruck $p_{z2}$ berücksichtig ist, sodass der Fülldruck $p_{z3}$ beide Korrekturverfahren berücksichtigt.

**Patentansprüche**

1. Verfahren zum schnellen Betanken eines Druckbehälters (19) mit einem gasförmigen Medium, das bezüglich dem Druckbehälter (19) unter einem höheren Druck in einer Speichereinheit (3) vorrätig ist,

   - in dem der Druckbehälter (19) mit einer druckfesten Verbindungsleitung (14) an eine mit der Speichereinheit (3) verbundenen Abgabevorrichtung (5) angeschlossen wird,
   - in dem die Umgebungstemparatur ($T_u$) vor dem Betanken gemessen wird und basierend auf einer vorgegebenen Temperatur-Druck-Charakteristik für Druckbehälter ein temperaturkorrigierter zulässiger Fülldruck ($p_z$) bestimmt wird,
   - in dem eine kleine Menge Gas dem Druckbehälter (19) zugeführt wird, um einen Druckausgleich zwischen der Abgabevorrichtung (5) und dem Druckbehälter (19) zu bewirken,
   - in dem der Anfangsdruck ($p_0$) des Druckbehälters (19) in der Abgabevorrichtung (5) gemessen wird,

- in dem eine bestimmte Masse Gas ($m_b$) dem Druckbehälter (19) zugeführt wird,
- in dem nach unterbrochenem Massenstrom der Druck ($p_1$) des Druckbehälters (19) in der Abgabevorrichtung (5) gemessen wird,

dadurch gekennzeichnet,

- dass der Druckbehälter (19) auf den zulässigen Fülldruck ($p_z$) gefüllt wird, dadurch,
- dass aus der bestimmten Masse Gas ($m_b$) und aus den gemessenen Druckwerten ($p_0$, $p_1$) ein mathematischer Zusammenhang zwischen Masse (m) und Druck (p) berechnet wird,
- dass eine erste zusätzliche Masse Gas ($m_{z1}$) berechnet wird, derart, dass mit Hilfe einer Extrapolation des mathematischen Zusammenhangs sichergestellt ist, dass zum Betanken des Druckbehälters (19) auf einen Fülldruck ($p_z$) mindestens eine weitere zusätzliche Masse Gas ($m_{zi}$) erforderlich ist
- dass die erste zusätzliche Masse Gas ($m_{z1}$) dem Druckbehälter (19) zugeführt wird, daraufhin der Massestrom unterbrochen wird und der Druck ($p_2$) des Druckbehälters (19) gemessen wird,
- dass die erste zusätzliche Masse Gas ($m_{z1}$) sowie der gemessene Druck ($p_2$) in der Berechnung des mathematischen Zusammenhangs berücksichtigt wird, um die Zuverlässigkeit der Extrapolation zu verbessern,
- und dass die Vorgänge der Berechnung einer weiteren zusätzlichen Masse Gas ($m_{zi}$) durch Extrapolation des mathematischen Zusammenhangs, das Zuführen einer weiteren zusätzlichen Masse Gas ($m_{zi}$) in den Druckbehälter (19) und das anschliessende Messen des Drucks ($p_i$) des Druckbehälter (19) mehrmals wiederholt wird,
- entweder bis im Druckbehälter (19) der zulässige Fülldruck ($p_z$) erreicht wird,
- oder bis durch eine Extrapolation des mathematischen Zusammenhangs eine weitere zusätzliche Masse Gas ($m_{zi}$) berechnet wird, die ein Ansteigen des Fülldrucks auf den zulässigen Fülldruck ($p_z$) erwarten lässt, und dass der Betankungsvorgang abgeschlossen wird, sobald diese weitere zusätzliche Masse Gas ($m_{zi}$) eingefüllt ist.

2. Verfahren nach Anspruch 1, dadurch gekennzeichnet, dass mit Hilfe eines mathematischen oder empirischen Zusammenhangs und unter Berücksichtigung von mindestens dem Anfangsdruck ($p_0$), dem zulässigen Fülldruck ($p_z$) sowie der Umgebungstemperatur ($T_u$) eine im Druckbehälter (19) zu erwartende Temperaturerhöhung ($\Delta T$) des Gases berechnet wird, und dass basierend auf einer vorgegebenen Temperatur-Druck-Charakteristik für Druckbehälter aus den Werten von Umgebungstemperatur ($T_u$) und errechneter Temperaturerhöhung ($\Delta T$) ein korrigierter zulässiger Fülldruck ($p_{z1}$) bestimmt wird, der während dem Betankungsvorgang als zulässiger Fülldruck ($p_z$) vorgegeben wird.

3. Verfahren nach Anspruch 2, dadurch gekennzeichnet, dass eine Füllzeit ($t_f$) berechnet wird, die ungefähr benötigt wird, um den Druckbehälter (19) vollständig zu füllen, dass eine während der Füllzeit ($t_f$) zu erwartende Temperaturreduktion ($\Delta T2$) des Gases im Druckbehälter (19) berechnet wird, welche auf Grund der Wärmeabgabe des Gases an den Druckbehälter auftritt, und dass basierend auf einer vorgegebenen Temperatur-Druck-Charakteristik für Druckbehälter aus dem Wert der Temperaturreduktion ($\Delta T2$) ein korrigierter zulässiger Fülldruck ($p_{z1}$) bestimmt wird, der während dem Betankungsvorgang als zulässiger Fülldruck ($p_z$) vorgegeben wird.

4. Verfahren nach einem der Ansprüche 1 bis 3, dadurch gekennzeichnet, dass die Temperatur ($T_g$) sowie die Masse (m) des zugeführten Gases in der Abgabevorrichtung (5) gemessen wird, dass daraus eine durchschnittliche Gastemperatur ($T_d$) des zugeführten Gases berechnet wird, und dass basierend auf einer vorgegebenen Temperatur-Druck-Charakteristik für Druckbehälter aus der Differenz von Umgebungstemperatur ($T_u$) und durchschnittlicher Gastemperatur ($T_d$) ein korrigierter zulässiger Fülldruck ($p_{z2}$) bestimmt wird, der während dem Betankungsvorgang als zulässiger Fülldruck ($p_z$) vorgegeben wird.

5. Verfahren nach einem der Ansprüche 1 bis 4, dadurch gekennzeichnet, dass die Speichereinheit (3) mehrere Speichertanks (3a, 3b, 3c) mit Gas unterschiedlichen Drucks enthält, und dass zu Beginn des Betankungsvorganges derjenige Speichertank (3a, 3b, 3c) an die Verbindungsleitung (14) geschaltet wird, der den kleinsten Druck aufweist, und dass beim Betanken auf einen Speichertank (3a, 3b, 3c) mit höherem Druck umgesteuert wird, wenn der Massendurchfluss des Gases durch die Abgabevorrichtung (5) einen vorgebbaren Wert unterschreitet.

6. Verfahren nach Anspruch 5, dadurch gekennzeichnet, dass während dem Zuführen einer Masse Gas an den Druckbehälter (19) zwischen den Speichertanks (3a, 3b, 3c) umgeschaltet werden kann.

7. Verfahren nach einem der Ansprüche 1 bis 6, dadurch gekennzeichnet, dass nach dem Zuführen der bestimmten Masse Gas ($m_b$) und nach dem

Messen des Druckes ($p_1$) eine Druckdifferenz zwischen dem Anfangsdruck ($p_0$) und dem Druck ($p_1$) berechnet wird, und dass, falls die Druckdifferenz einen vorgebbaren Wert unterschreitet, mindestens einmal eine weitere bestimmte Masse Gas ($m_b$) zugeführt wird und daraufhin der Druck ($p_1$) gemessen wird, bis die Druckdifferenz zwischen ($p_1$) und ($p_0$) den vorgebbaren Wert übersteigt.

8. Verfahren nach einem der Ansprüche 1 bis 7, dadurch gekennzeichnet, dass der Abgabevorrichtung (5) ein Fülldruck oder eine Masse Gas oder ein Geldbetrag vorgebbar ist, und dass die zugeführte Masse Gas derart von der Abgabevorrichtung (5) geregelt wird, dass der Druckbehälter (19) auf den vorgebbaren Wert gefüllt wird.

9. Verfahren nach einem der Ansprüche 1 bis 8, dadurch gekennzeichnet, dass an der Ausgabevorrichtung (5c) der Druck ($p_i$) des Druckbehälters (19) und/oder der Druck ($P_i$) in Prozent des zulässigen Fülldruckes ($p_z$) und/oder die eingefüllte Masse Gas ($m$) und/oder die eingefüllte Masse Gas ($m$) in Prozent der einzufüllenden Masse Gas ($m_{v1}$) angezeigt wird.

10. Verfahren nach einem der Ansprüche 1 bis 9, dadurch gekennzeichnet, dass der Massenstrom in der Abgabevorrichtung (5) mit einem Massendurchflussmesser (8) basierend auf dem Korriolis-Prinzip gemessen wird.

11. Abgabevorrichtung (5) zum schnellen Betanken eines Druckbehälters (19) mit einem gasförmigen Medium, wobei der Abgabevorrichtung (5) eine Speichereinheit (3) vorschaltbar ist und eine druckfeste Verbindungsleitung (14) nachschaltbar ist, um das in der Speichereinheit (3) befindliche gasförmige Medium, dessen Druck über dem des Druckbehälters (19) liegt, geregelt an den der Verbindungsleitung (14) nachgeschalteten Druckbehälter (19) abzugeben, wobei die Abgabevorrichtung eine Steuer- und Messvorrichtung (5a), eine Regelvorrichtung (5b) sowie eine Ein- und Ausgabevorrichtung (5c) umfasst, dadurch gekennzeichnet,

- dass die Steuer- und Messvorrichtung (5a) ein ansteuerbares Ventil (7), eine Massendurchflussmessvorrichtung (8) und eine Druckmessvorrichtung (9) umfasst, die durch Verbindungsleitungen (11, 12, 13) miteinander verbunden sind, wobei die Druckmessvorrichtung (9) zwischen dem Ventil (7) und der Verbindungsleitung (14) angeordnet ist,
- dass die Regelvorrichtung (5b) einen Rechner mit RAM, ROM und Ein-/Ausgabemitteln umfasst, und dass der Rechner über eine Messleitung (9a) ein Messignal des Drucksensors (9) sowie über eine Messleitung (8a) ein Messignal der Massendurchflussmessvorrichtung (8) sowie über eine Messleitung (10a) ein Messignal eines Temperatursensors (10), der die Umgebungstemparatur erfasst, zyklisch einliest, und dass der Rechner über eine Steuerleitung (7a) das Regelventil (7) ansteuert,

- und dass die Ein- und Ausgabevorrichtung (5c) Ausgabemittel umfasst, um Grössen wie Gasmenge, Druck oder Preis anzuzeigen.

12. Abgabevorrichtung (5) nach Anspruch 11, dadurch gekennzeichnet, dass die der Abgabevorrichtung (5) vorgeschaltete Speichereinheit (3) eine Mehrzahl von Speichertanks (3a, 3b, 3c) mit je einer Verbindungsleitung (4a, 4b, 4c) umfasst, dass die Steuer- und Messvorrichtung (5a) eine Umsteuervorrichtung (6) umfasst, um jeweils eine der Verbindungsleitungen (4a, 4b, 4c) auf eine Verbindungsleitung (12) umzusteuern, wobei die Verbindungsleitung (12) über das Regelventil (7) und die Durchflussmessvorrichtung (8) mit der Verbindungsleitung (14) verbunden ist, und dass die Regelvorrichtung (5b) ein Steuersignal (7a) generiert, zur Ansteuerung der Umsteuervorrichtung (6).

13. Gasbetankungsgerät oder Gasbetankungsanlage mit einer Vorrichtung nach einem der Ansprüche 11 und 12.

**Claims**

1. A method for the rapid filling of a pressure container (19) with a gaseous medium which is available in a storage unit (3) at a higher pressure relative to the pressure container (19),

- in which the pressure container (19) is connected with a pressure-tight connection line (14) onto a delivery device (5) connected to the storage unit (3),
- in which the environmental temperature ($T_u$) prior to filling is measured and a temperature corrected permissible filling pressure ($p_z$) is determined on the basis of a preset temperature-pressure characteristic for pressure containers,
- in which a small quantity of gas is supplied to the pressure container (19) in order to bring about a pressure compensation between the delivery device (5) and the pressure container (19),
- in which the initial pressure ($p_0$) of the pressure container (19) is measured in the delivery device (5),
- in which a specific mass of gas ($m_b$) is supplied to the pressure container (19), and

- in which the pressure ($p_1$) of the pressure container (19) is measured in the delivery device (5) after the mass flow has been interrupted,

characterised in that

- the pressure container (19) is filled to the permissible filling pressure ($p_z$);
- in that a mathematical relationship between mass (m) and pressure (p) is calculated from the specific mass of gas ($m_b$) and from the measured pressure values ($p_0$, $p_1$);
- in that a first additional mass of gas ($m_{z1}$) is calculated in such a way, with the aid of an extrapolation of the mathematical relationship, that at least one further additional mass of gas ($m_{zi}$) is required for the filling of the pressure container to a filling pressure ($p_z$),
- in that the first additional mass of gas ($m_{z1}$) is supplied to the pressure container (19), the mass flow is subsequently interrupted and the pressure ($p_2$) of the pressure container (19) is measured;
- in that the first additional mass of gas ($m_{z1}$) and also the measured pressure ($p_2$) is taken into account in the calculation of the mathematical relationship in order to improve the reliability of the extrapolation,
- and in that the procedures of calculating an additional mass of gas ($m_{zi}$) by extrapolation of the mathematical relationship, the supply of a further additional mass of gas ($m_{zi}$) into the pressure container (19) and the subsequent measurement of the pressure ($p_i$) is repeated more than once,
- either until the permissible filling pressure ($p_z$) in the pressure container (19) is achieved,
- or until a further additional mass of gas ($m_{zi}$) is calculated by extrapolation of the mathematical relationship which permits an increase of the filling pressure to the permissible filling pressure ($p_z$) to be expected, and
- in that the filling procedure is terminated as soon as this further additional mass of gas ($m_{zi}$) has been filled into the container.

2. Method in accordance with claim 1, characterised in that with the aid of a mathematical or empirical relationship, and on taking account of at least the initial pressure ($P_0$), the permissible filling pressure ($P_z$) and also the environmental temperature ($T_u$), a temperature rise ($\Delta T$) of the gas to be expected in the pressure container (19) is computed; and in that based on a preset temperature-pressure characteristic for pressure containers a corrected permissible filling pressure ($P_{zi}$) is determined from the values of the environmental temperature ($T_u$) and the computed temperature increase ($\Delta T$), and is preset as the permissible filling pressure ($P_z$) during the filling procedure.

3. Method in accordance with claim 2, characterised in that a filling time ($t_f$) is computed, which is approximately required in order to fully fill the pressure container (19); in that a temperature reduction ($\Delta T2$) of the gas in the pressure container (19) to be expected during the filling time ($t_f$) is computed which arises as a result of the thermal dissipation of the gas to the pressure container; and in that a corrected permissible filling pressure ($P_{z1}$) is determined from the value of the temperature reduction ($\Delta T2$) based on a preset temperature pressure characteristic of pressure containers and is preset during the filling procedure as the permissible filling pressure ($P_z$).

4. Method in accordance with one of the claims 1 to 3, characterised in that the temperature ($T_g$) and also the mass (m) of the supplied gas is measured in the delivery device (5); in that a an average gas temperature ($T_d$) of the supplied gas is computed from this; and in that a corrected permissible filling pressure ($P_{z2}$) is determined from the difference of the environmental temperature ($T_u$) and the average gas temperature ($T_d$) based on a preset temperature-pressure characteristic for pressure containers and is preset during the tanking procedure as the permissible filling pressure ($P_z$).

5. Method in accordance with one of the claims 1 to 4, characterised in that the storage unit (3) contains a plurality of storage tanks (3a, 3b, 3c) with gas of different pressure; and in that, at the start of the filling procedure, the storage tank (3a, 3b, 3c) having the smallest pressure is connected to the connection line (14); and in that a switch is made during filling to a storage tank (3a, 3b, 3c) with higher pressure when the mass flow of the gas through the delivery device (5) falls below a presettable value.

6. Method in accordance with claim 5, characterised in that the switch-over between the storage tanks (3a, 3b, 3c) can be made during the supply of a mass of gas to the pressure container (19).

7. Method in accordance with one of the claims 1 to 6, characterised in that, after the supply of the specific mass of gas ($m_b$) and after the determination of the pressure ($p_1$), a pressure difference is computed between the initial pressure ($p_0$) and the pressure ($p_1$); and in that a further specific mass of gas ($m_b$) is supplied at least once if the pressure difference falls short of a presettable value and the pressure ($p_1$) is thereupon determined until the pressure difference between ($p_1$) and ($p_0$) exceeds the presettable value.

8. Method in accordance with one of the claims 1 to 7, characterised in that a filling pressure, or a mass of gas, or an amount of money can be preset for the delivery device (5); and in that the supplied mass of gas is regulated by the delivery device (5) in such a way that the pressure container (19) is filled to the presettable value.

9. Method in accordance with one of the claims 1 to 8, characterised in that the pressure ($p_i$) of the pressure container (19) and/or the pressure ($p_i$) as a percentage of the permissible filling pressure ($p_z$) and/or the mass (m) of the gas filled and/or the mass (m) of the gas filled as a percentage of the mass ($m_{v1}$) of gas to be filled is displaced at the delivery device (5c).

10. Method in accordance with one of the claims 1 to 9, characterised in that the mass flow in the delivery device (5) is measured with a mass through-flow meter (8) based on the Coriolis principle.

11. Delivery device (5) for the rapid filling of a pressure container (19) with a gaseous medium, with the delivery device (5) being connectable in front of a storage unit (3) and with a pressure-tight connection line (14) being connectable after the delivery device (5) in order to deliver the gaseous medium located in the storage unit, (3) of which the pressure lies above that of the pressure container (19), in regulated manner to the pressure container (19) connected after the connection line (14), wherein the delivery device has a control and measurement device (5a), a regulating device (5b) and also an input and output device (5c), characterised

- in that the control and measurement device (5a) has a controllable valve (7), a mass through-flow measuring device (8) and a pressure measuring device (9) which are connected to one another by connection lines (11, 12, 13), with the pressure measuring device (9) being arranged between the regulating valve (7) and the connection line (14),
- in that the regulating device (5b) includes a computer with RAM, ROM and input/output means, and in that the computer cyclically reads in, via a measurement line (9a), a measurement signal from the pressure sensor (9) and also, via a measurement line (8a), a measurement signal of the mass through-flow measuring device (8), as well as, via measurement line (10a), a measurement signal of a temperature sensor (10) which detects the environmental temperature; in that the computer controls the regulating valve (7) via a control line (7a);

- and in that the input and output device (5c) includes output means in order to indicate parameters such as the quantity of gas, pressure or price.

12. Delivery device (5) in accordance with claim 11, characterised in that the storage unit (3) connected before the delivery device (5) includes a plurality of storage tanks (3a, 3b, 3c) each having a connection line (4a, 4b, 4c) ; in that the control and measurement device (5a) has a change-over device (6) in order to respectively change-over one of the connection lines (4a, 4b, 4c) to a connection line (12), with the connection line (12) being connected with the connection line (14) via the regulating valve (7) and the through-flow measuring device (8); and in that the regulating device (5b) generates a control signal (7a) for control of the change-over device (6).

13. Gas filling apparatus or gas filling installation having an apparatus in accordance with one of the claims 11 and 12.

**Revendications**

1. Procédé de remplissage rapide d'un récipient à pression (19) avec un fluide gazeux, stocké à une pression supérieure par rapport à celle du récipient à pression (19), dans une unité de stockage (3),

- dans lequel le récipient à pression (19) est raccordé, à l'aide d'une conduite de liaison (14) résistant à la pression, à un dispositif de l'émission (5) relié à l'unité de stockage (3),
- dans lequel la température ambiante ($T_u$) est mesurée avant le remplissage et une pression de remplissage ($p_z$), admissible pour le récipient à pression et corrigée en température, étant déterminée sur la base d'une caractéristique température-pression prédéterminée,
- dans lequel une petite quantité de gaz est amenée au récipient à pression (19), afin de provoquer un équilibrage de pression entre le dispositif d'émission (5) et le récipient à pression (19),
- dans lequel la pression initiale ($p_0$) du récipient à pression (19) est mesurée dans le dispositif d'émission (5),
- dans lequel une masse déterminée de gaz ($m_b$) est amenée au récipient à pression (19)
- dans lequel, après avoir procédé à l'interruption du débit-masse, la pression ($p_1$) du récipient à pression (19) dans le dispositif d'émission (5) est mesurée,

caractérisé

- en ce que le récipient à pression (19) est rempli à la pression de remplissage admissible ($p_z$),

- en ce que, à partir de la masse de gaz ($m_b$) déterminée et à partir des valeurs de pression ($p_0$, $p_1$) mesurées, une relation mathématique est calculée entre la messe (m) et la pression (p),

- en ce qu'une première masse de gaz supplémentaire ($m_{z1}$) est calculée, de manière que, à l'aide d'une extrapolation de la relation mathématique, il soit assuré que, au remplissage du récipient à pression (19) à une pression de remplissage ($p_z$), au moins une autre masse de gaz supplémentaire ($m_{zi}$) soit nécessaire,

- en ce que la première masse supplémentaire ($m_{z1}$) est amenée au récipient à pression (19), suite à quoi le débit-masse est coupé et la pression ($p_2$) du récipient a pression (19) est mesurée,

- en ce que la première masse de gaz supplémentaire ($m_{z1}$) ainsi que la pression mesurée ($p_2$) sont prises en compte dans le calcul de la relation mathématique, afin d'améliorer la fiabilité de l'extrapolation,

- et en ce que l'on procède à une répétition à plusieurs reprises des processus de calcul d'une autre masse de gaz supplémentaire ($m_{zi}$), par extrapolation de la relation mathématique, amenée d'une autre masse de gaz supplémentaire ($m_{zi}$) dans le récipient à pression (19), et mesure subséquente de la pression ($p_i$) du récipient à pression (19),

- où soit la pression de remplissage ($p_z$) admissible est atteinte dans le récipient à pression (19),

- soit jusqu'à ce que, par une extrapolation de la relation mathématique, soit calculée une autre masse de gaz supplémentaire ($m_{zi}$) qui permet d'espérer une augmentation de la pression de remplissage jusqu'à atteinte de la valeur de la pression de remplissage admissible ($p_z$), et en ce que le processus de remplissage est cessé dès que cette autre masse de gaz supplémentaire ($m_{zi}$) a fait l'objet d'un remplissage.

2. Procédé selon la revendication 1, caractérisé en ce que, à l'aide d'une relation mathématique ou empirique et en prenant en considération au moins la pression de remplissage ($p_0$), la pression de remplissage admissible ($p_z$) ainsi que la température ambiante ($T_u$), on calcule une augmentation de température ($\Delta T$) attendue du gaz dans le récipient à pression (19), et en ce que, en se basant sur une caractéristique température-pression prédéterminée pour le récipient à pression, on détermine, à partir des valeurs de la température ambiante ($T_u$) et de l'augmentation de température calculée ($\Delta T$), une pression de remplissage admissible ($p_{z1}$) corrigée, prédéterminée pendant le processus de remplissage à titre de pression de remplissage admissible ($p_z$).

3. Procédé selon la revendication 2, caractérisé en ce qu'un temps de remplissage ($t_f$) est calculé, ce temps étant à peu près nécessaire pour remplir complètement le récipient à pression (19), en ce qu'est calculée une réduction de température ($\Delta T2$), attendue pendant le temps de remplissage ($t_f$), du gaz dans le récipient à pression (19), réduction de température se produisant sur la base de l'évacuation de chaleur au niveau du gaz à destination du récipient à pression, et en ce que, en se basant sur une caractéristique température-pression prédéterminée pour des récipients à pression, on détermine, à partir de la valeur de la réduction de température ($\Delta T2$), une pression de remplissage ($p_{z1}$) admissible corrigée, prédéterminée pendant le processus de remplissage à titre de pression de remplissage admissible ($p_z$).

4. Procédé selon l'une des revendications 1 à 3, caractérisé en ce que la température ($T_g$) ainsi que la masse (m) du gaz amené dans le dispositif d'émission (5) sont mesurées, en ce qu'on calcule, à partir de cela, une température de gaz moyenne ($T_d$) du gaz amené et en ce que, en se basant sur une caractéristique température-pression prédéterminée pour des récipients à pression, on détermine, à partir de la différence entre la température ambiante ($T_u$) et la température de gaz moyenne ($T_d$), une pression de remplissage admissible ($p_{z2}$) corrigée qui est prédéterminée pendant le processus de remplissage, à titre de pression de remplissage admissible ($p_z$).

5. Procédé selon l'une des revendications 1 à 4, caractérisé en ce que l'unité de stockage (3) contient plusieurs récipients de stockage (3a, 3b, 3c) ayant des gaz sous des pressions différentes et en ce que, au début du processus de remplissage, on procède au branchement, sur la conduite de liaison (14), du récipient de stockage (3a, 3b, 3c) qui présente la pression minimale et en ce que, lors du remplissage, on commute sur un réservoir de stockage (3a, 3b, 3c) ayant une pression supérieure, lorsque le débit-masse du gaz traversant le dispositif d'émission (5) descend au-dessous d'une valeur susceptible d'être prédéterminée.

6. Procédé selon la revendication 5, caractérisé en ce que, pendant l'amenée d'une masse de gaz au récipient à pression (19), on procède à une commutation de branchement entre les réservoirs de stockage (3a, 3b, 3c).

7. Procédé selon l'une des revendications 1 à 6, caractérisé en ce que, après l'amenée de la masse de gaz ($m_b$) déterminée et après la mesure de la pression ($p_1$), on calcule une différence de pression entre la pression initiale ($p_0$) et la pression ($p_1$) et que, dans le cas où la différence de pression descend au-dessous d'une valeur susceptible d'être prédéterminée, au moins à une reprise on amène une autre masse déterminée de gaz ($m_b$) et, suite à cela, on mesure la pression ($p_1$) jusqu'à ce que la différence de pression entre ($p_1$) et ($p_0$) soit supérieure à la valeur susceptible d'être prédéterminée.

8. Procédé selon l'une des revendications 1 à 7, caractérisé en ce qu'au dispositif d'émission (5) est susceptible d'être allouée une pression de remplissage ou une masse de gaz ou une valeur monétaire, et en ce que la masse amenée de gaz est régulée par le dispositif d'émission (5), de manière que le récipient à pression (19) soit rempli à la valeur susceptible d'être prédéterminée.

9. Procédé selon l'une des revendications 1 à 8, caractérisé en ce qu'on affiche sur le dispositif de distribution (5c) la pression ($p_i$) du récipient à pression (19) et/ou la pression ($p_i$) exprimée en pourcentage de la pression de remplissage admissible ($p_z$) et/ou la masse de gaz ($m$) fournie au remplissage et/ou la masse de gaz ($m$) fournie au remplissage exprimée en pourcentage de la masse de gaz ($m_{v1}$) à charger au remplissage.

10. Procédé selon l'une des revendications 1 à 9, caractérisé en ce que le débit-masse dans le dispositif d'émission (5) est mesuré à l'aide d'un débitmètre massique (8) en se basant sur le principe de Corriolis.

11. Dispositif d'émission (5) destiné à permettre le remplissage rapide d'un récipient à pression (19) avec un fluide gazeux, en amont du dispositif d'émission (5) étant susceptible d'être branchée une unité de stockage (3) et en aval étant susceptible d'être branchée une conduite de liaison (14) résistant à la pression, pour fournir de façon régulée le fluide gazeux se trouvant dans l'unité de stockage (3), dont la pression est supérieure à celle du récipient à pression (19), au récipient à pression (19) branché en aval de la conduite de liaison (14), le dispositif d'émission comprenant un dispositif de commande et de mesure (5a), un dispositif de régulation (5b) ainsi qu'un dispositif d'entrée et de sortie (5c), caractérisé

- en ce que le dispositif de commande et de mesure (5a) comprend une valve (7) susceptible d'être commandée, un dispositif de mesure de débit-masse (8) et un dispositif de mesure de pression (9), reliés ensemble au moyen de conduites de liaison (11, 12, 13), le dispositif de mesure de pression (9) étant disposé entre la valve (7) et la conduite de liaison (14),

- en ce que le dispositif de régulation (5b) comprend un ordinateur équipé d'une RAM, d'une ROM et de moyens d'introduction de sortie, et en ce que l'ordinateur lit de façon cyclique, par l'intermédiaire d'une liaison de mesure (9a), un signal de mesure venant du capteur de pression (9) ainsi que, par l'intermédiaire d'une ligne de mesure (8a), un signal de mesure venant du dispositif de mesure de débit-masse (8) ainsi que, par l'intermédiaire d'une ligne de mesure (10a), un signal de mesure venant d'un capteur de température (10) qui appréhende la température ambiante, qui la stocke d'une manière cylique et en ce que l'ordinateur commande, par l'intermédiaire d'une ligne commande (7a), la valve de régulation (7),

- et en ce que le dispositif d'entrée et de sortie (5c) comprend des moyens d'édition destinés à afficher des grandeurs, tels que la quantité de gaz, la pression ou le prix.

12. Dispositif d'émission (5) selon la revendication 11, caractérisé en ce que l'unité de stockage (3) branchée en amont du dispositif d'émission (5) comprend une pluralité de réservoirs de stockage (3a, 3b, 3c) ayant chacun une conduite de liaison (4a, 4b, 4c), en ce que le dispositif de commande et de mesure (5a) comprend un dispositif de commande de commutation (6) conçu pour effectuer la commande de commutation respective d'une des conduites de liaison (4a, 4b, 4c) sur une conduite de liaison (12), la conduite de liaison (12) étant reliée, par la valve de régulation (7) et le dispositif de mesure de débit (8), à la conduite de liaison (14), et en ce que le dispositif de régulation (5b) génère un signal de commande (7a) destiné à la commande du dispositif de commande de commutation (6).

13. Appareil de remplissage en gaz ou installation de remplissage en gaz équipé(e) d'un dispositif selon l'une des revendications 11 et 12.

# Fig.1a

# Fig.1b

## Fig.1c

## Fig.1d

EP 0 653 585 B1

Fig.1e

Fig.1f

Fig. 2a

EP 0 653 585 B1

Fig.2b

# Fig.2c

EP 0 653 585 B1

# Fig.3a

```
( Start )
   │
┌──────────────────────────────────────────┐
│ - Initialisierung der Abgabevorrichtung   │
└──────────────────────────────────────────┘
   │
┌──────────────────────────────────────────┐      ┌─────────────────┐
│ Warteschlaufe                             │      │ gesamten Tank-  │
│ - Warten auf Start des Betankungsvorganges│      │ vorgang beenden │
└──────────────────────────────────────────┘      └─────────────────┘
   │
┌──────────────────────────────────────────┐
│ - Umgebungstemperatur $T_u$ messen und abspeichern │
│ - Zulässiger Fülldruck $p_z$ berechnen aus $T_u$   │
│ - 30 Sekunden warten                      │
│ - Druck $p_i$ messen                      │
└──────────────────────────────────────────┘
   │
   ◇ $p_i >= p_z - 10$ ──── Ja ────►
   │
  Nein
   │
┌──────────────────────────────────────────┐
│ - kleine Menge Gas zuführen               │
│   um das Rückschlagventil zu öffnen       │
│ - Druck po messen                         │
│ - Einfüllmasse mb = 500g einfüllen        │
│ - Druck $p_1$ messen                      │
└──────────────────────────────────────────┘
   │
   ◇ $p_1 >= p_z - 10$ ──── Ja ────►
   │
  Nein
   │
┌──────────────────────────────────────────┐
│ - zusätzliche Masse Gas $m_{zi}$ berechnen │
│ - Ventil öffnen                           │
│ - Massenfluss dm/dt messen                │
│ - Durchflussmasse m berechnen             │
│ - Plötzlichen Druckverlust überwachen. Sobald dm/dt einen Grenzwert │
│   überschreitet-> Alarmsignal             │
│ - Ventil schliessen wenn $m = m_{zi}$     │
│ - Druck $p_i$ messen                      │
└──────────────────────────────────────────┘
   │
   ◇ $p_i >= p_z$
Nein          Ja
```

# Fig.3b

Start

- Initialisierung der Abgabevorrichtung

Warteschlaufe
- Warten auf Start des Betankungsvorganges

gesamter Tankvorgang beenden

- Umgebungstemperatur $T_u$ messen und abspeichern
- Zulässiger Fülldruck $p_z$ berechnen aus $T_u$
- 30 Sekunden warten
- Druck $p_i$ messen

$p_i >= p_z -10$  Ja

Nein

- kleine Menge Gas zuführen
  um das Rückschlagventil zu öffnen
- Druck po messen
- Einfüllmasse $m_b = 500 g$ einfüllen
- Druck $p_1$ messen

$p_1 >= p_z -10$  Ja

Nein

- korrigierten zulässigen Fülldruck $p_{z1}$ berechnen
- zusätzliche Masse Gas $m_{zi}$ berechnen
- Ventil öffnen
- Massenfluss dm/dt messen
- Durchflussmasse m berechnen
- Plötzlichen Druckverlust überwachen. Sobald m/dt einen Grenzwert
  überschreitet-> Alarmsignal
- Ventil schliessen wenn dm = $m_{zi}$

letzte zusätzliche
Masse Gas $m_{zi}$ eingefüllt  Ja

Nein

Druck $p_i$ messen